# FASCICULE DE BREVET EUROPEEN

(11) **EP 3 074 759 B1**
(45) Date de publication et mention de la délivrance du brevet: **05.08.2020**
(21) Numéro de dépôt: 14795994.4
(22) Date de dépôt: 28.10.2014
(51) Int. Cl.: G01N 21/88

(54) **RECONSTRUCTION 3D SURFACIQUE MICROMÉTRIQUE**
3D-REKONSTRUKTION EINER MIKROMETEROBERFLÄCHE
MICROMETRE SURFACE 3D RECONSTRUCTION

(30) Priorité: 26.11.2013 FR 1361650
(43) Date de publication de la demande: 05.10.2016
(73) Titulaire: IFP Energies nouvelles, 92500 Rueil-Malmaison (FR)
(72) Inventeur: ITTHIRAD, Frédéric, F-42000 Saint Etienne (FR); MOREAUD, Maxime, F-42800 Saint Martin La Plaine (FR); BOUABDELLAH, Mohamed, F-42000 Saint Etienne (FR)
(74) Mandataire: IFP Energies nouvelles
(86) Numéro de dépôt international: PCT/EP2014/073110
(87) Numéro de publication internationale: WO 2015/078647

(56) Documents cités:
- JP-A- H11 183 149
- US-B1- 7 525 649

## Description

La présente invention concerne le domaine de reconstruction tridimensionnelle d'objet par triangulation, en particulier pour des objets millimétriques, par exemple des supports de catalyseur.

Les dispositifs connus d'acquisition par triangulation laser permettent de réaliser l'acquisition tridimensionnelle d'une surface par l'observation (en général par caméra) de la déformation d'un profil laser projeté sur un objet. Ces dispositifs utilisent des lasers conventionnels, de diverses longueurs d'onde. Ce sont des sources cohérentes disposant d'une forte puissance qu'il est possible de collimater pour obtenir un faisceau lumineux très fin sur une importante profondeur de champ. Ils permettent d'obtenir des acquisitions avec une résolution de l'ordre de la centaine voire de quelques dizaines de microns pour la carte d'élévation. Ces dispositifs sont très utilisés pour le contrôle d'objets métriques ou centimétriques avec une résolution centimétrique ou millimétrique. La source lumineuse est en général un laser permettant une puissance et une profondeur de champs importantes. Les documents suivants font partie de l'état de la technique pertinent: US7525649 et JPH11183149.

La présente invention a pour objectif de perfectionner le système et le procédé de mesure, notamment pour des objets de taille millimétrique afin d'avoir une résolution micrométrique de la surface qui permet d'obtenir des caractérisations desdits objets. Ces caractéristiques sont par exemples des mesures de profondeur de fissures ou de creux, ou de rugosité.

Ainsi, la présente invention concerne un système d'acquisition tridimensionnelle surfacique d'objet, comportant des moyens de projection d'un faisceau lumineux fin, au moins une caméra numérique d'acquisition des images du profil produit par ledit faisceau sur l'objet, des moyens de déplacement du faisceau le long de l'objet, des moyens de traitement des images acquises. Dans ledit système, les moyens de projection comportent une LED dont la lumière est focalisée sous forme d'une frange d'épaisseur inférieure à 50 µm et dans lequel les moyens de traitement des images analysent les profils au sub-pixel et corrigent les bruits inhérents au faisceau et à la surface de l'objet.

Deux caméras peuvent être placées de part et d'autre des moyens de projection de façon à limiter les angles morts d'acquisition.

L'objet peut être placé sur un support mobile en translation.

Ledit objet peut être un catalyseur en grain, bille, ou morceau d'extrudé.

La présente invention sera mieux comprise et ses avantages apparaîtront plus clairement à la lecture de la description qui suit, nullement limitative, illustrée par les figures ci-après annexées, parmi lesquelles :
- la figure 1 montre schématiquement le principe d'acquisition et le phénomène d'angle mort,
- la figure 2 montre la forme de la ligne lumineuse déformée par un objet, ici un cube,
- la figure 3 montre l'utilisation d'une deuxième caméra permettant de supprimer les angles morts.
- la figure 4 montre une surface sur laquelle a été projetée un laser et une LED pour mettre en évidence le speckle,
- la figure 5 montre un exemple de profil acquis par le dispositif et traitée par logiciel.

### Description technique du système:

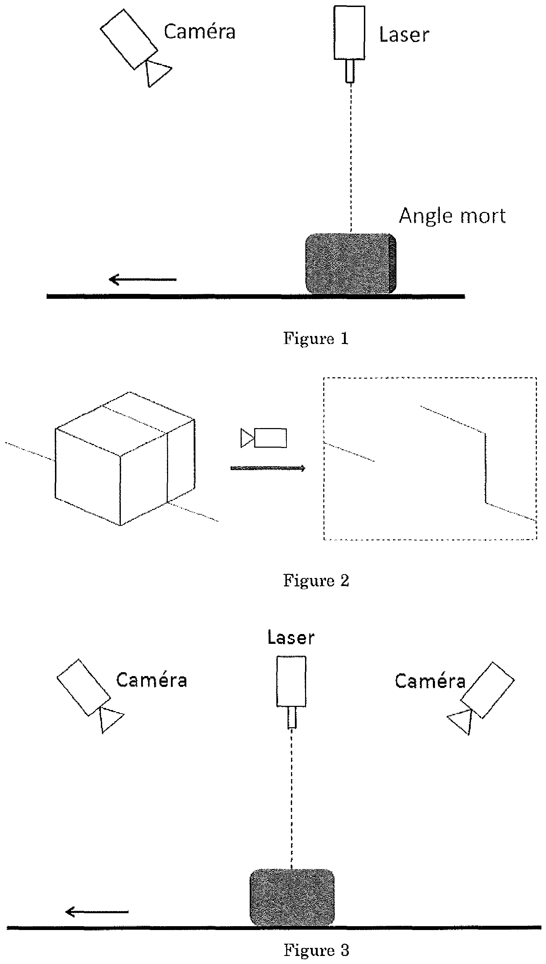

Selon la figure 1, l'objet d'intérêt est placé sur un support mobile en translation, sous un système solidaire formé par un moyen de production d'un faisceau lumineux et une, ou plusieurs caméras. En général, le dispositif lumineux est placé verticalement par rapport au support, et la ou les caméra(s) forme(nt) un angle donné par rapport à lui. Pour les objets de forme complexe ou de grande dimension, il est également possible d'inverser les déplacements relatifs, en laissant fixe l'objet et en déplaçant le système d'acquisition au-dessus ou autour de l'objet.

Le faisceau lumineux est projeté sous forme d'une frange lumineuse fine sur l'objet d'intérêt. Si l'on considère la projection d'une ligne, celle-ci est parfaitement rectiligne sous la caméra lorsqu'il n'y a pas d'objet. Lorsqu'un objet est présent sur le support, la ligne est déformée. L'image de cette déformation, que l'on appellera par la suite profil, est acquise par la caméra (figure 2).

L'acquisition complète de l'objet se fait en déplaçant l'objet sous la caméra ou le système d'acquisition lui-même au-dessus de l'objet. En cumulant ainsi les profils, on obtient la reconstruction surfacique tridimensionnelle de l'objet. On notera qu'en fonction de l'angle entre la caméra et le laser, un angle mort plus ou moins important est présent dans l'image (figures 1 et 2).

Il est possible de diminuer, voire de supprimer cet angle mort par l'utilisation de deux caméras comme représentées sur la figure 3. Les images fournies par la ou les caméra(s) pour chaque position sont traitées par un logiciel de traitement d'images. Le profil exact au pixel près est extrait en prenant pour chaque colonne de l'image le pixel d'intensité la plus élevée. Il est possible d'obtenir une précision sous-pixel en utilisant une fonction d'interpolation, par exemple une fonction gaussienne, pour estimer la position sub-pixel sur la colonne du pixel le plus lumineux. Les valeurs réelles de la carte d'élévation sont obtenues à l'aide d'une matrice de transformation calculée au moment de la calibration du système. Une matrice de transformation est calculée par couple faisceau/caméra. Elle est fonction de la position des deux éléments par rapport à l'objet, de la résolution souhaitée en profondeur, et de la hauteur des surfaces à numériser.

Pour obtenir la résolution du système pour de petits objets de taille millimétrique, il est impératif d'être le plus précis possible au niveau de la détection sub-pixel de la ligne du profil lumineux. On distingue trois types de bruits dans le cas d'un système de triangulation à partir d'un faisceau lumineux: - le bruit électrique, - le bruit de quantification et - le "speckle". Les bruits électriques et de quantification sont issus du capteur numérique de la caméra. Le "speckle" est inhérent au caractère monochromatique de la source. Il est également appelé tavelure ou granularité laser car il apparaît visuellement sous la forme d'une alternance de grains lumineux et de grains sombres. Il est directement lié à la longueur d'onde du faisceau lumineux et à la rugosité de la surface de l'objet.

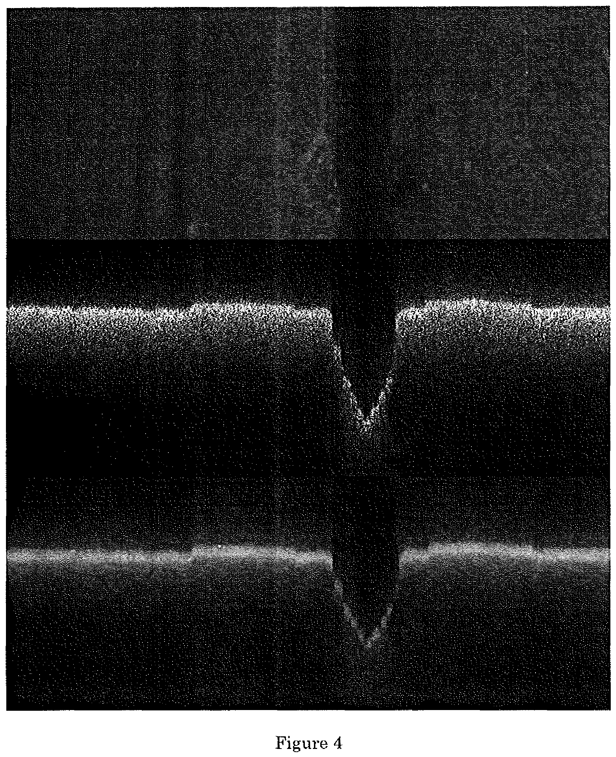

La figure 4 montre un objet présentant une fissure (largeur du champ d'observation de 15mm). Dans le haut de la figure 4, on a l'observation par caméra de l'objet et son profil obtenu par un laser (on observe clairement le bruit de speckle). Dans le bas de la figure 4, on a le profil du même objet obtenu par une LED et le système adapté selon l'invention

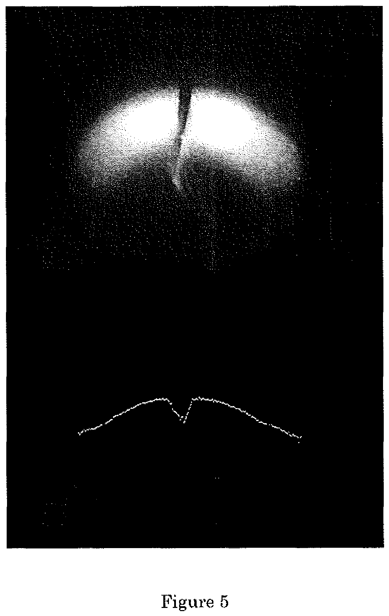

Pour obtenir l'acquisition d'objet de taille millimétrique, avec une résolution micrométrique et une profondeur de champ micrométrique, le moyen de projection du faisceau lumineux est un dispositif "LED". Il utilise une LED dont le faisceau lumineux est focalisé à l'aide de 2 condenseurs asphériques sur un masque disposant d'une ligne d'une épaisseur la plus fine possible. Dans le cas présent, elle est de 25 µm. Avant d'être projetée sur l'objet, la ligne lumineuse est à nouveau focalisée à l'aide d'un objectif de caméra. En figure 5 est présenté un exemple d'acquisition avec en haut l'image de la ligne lumineuse observée par la caméra et en bas le profil extrait.

Ce dispositif peut être utilisé pour réaliser l'acquisition tridimensionnelle surfacique de supports de catalyseur millimétrique ou centimétrique, ou d'autres objets de taille millimétrique, centimétrique, ou de taille plus importante, nécessitant une précision d'acquisition de l'ordre du micron pour des analyses de formes 3D, de défauts de surface 2D ou 3D, ou de rugosité de surface.

## Revendications

1. Système d'acquisition tridimensionnelle surfacique d'objet, comportant des moyens de projection d'un faisceau lumineux fin, au moins une caméra numérique d'acquisition des images du profil produit par ledit faisceau sur l'objet, des moyens de déplacement du faisceau le long de l'objet, des moyens de traitement des images acquises, système dans lequel les moyens de projection comportent une LED dont la lumière est focalisée sous forme d'une frange d'épaisseur inférieure à 50 µm le système **caractérisé en ce que**: les moyens de traitement des images sont configurés pour analyser les profils au sub-pixel par fonction d'interpolation et corriger les bruits inhérents au faisceau et à la surface de l'objet.

2. Système selon la revendication 1, dans lequel deux caméras sont placées de part et d'autre des moyens de projection de façon à limiter les angles morts d'acquisition.

3. Système selon l'une des revendications précédentes, dans lequel l'objet est placé sur un support mobile en translation.

4. Système selon l'une des revendications précédentes, dans lequel ledit objet est un catalyseur en grain, bille, ou morceau d'extrudé.

## Patentansprüche

1. System zur dreidimensionalen Oberflächenerfassung eines Objekts, welches Mittel zur Projektion eines dünnen Lichtstrahls, wenigstens eine Digitalkamera zur Erfassung der Bilder des von dem Strahl auf dem Objekt erzeugten Profils, Mittel zur Verschiebung des Strahls entlang des Objekts und Mittel zur Verarbeitung der erfassten Bilder umfasst, wobei in dem System die Mittel zur Projektion eine LED umfassen, deren Licht in Form eines Streifens mit einer Dicke von weniger als 50 µm fokussiert wird,
wobei das System **dadurch gekennzeichnet ist, dass** die Mittel zur Verarbeitung der Bilder dafür ausgelegt sind, die Profile auf Subpixel genau mittels Interpolationsfunktion zu analysieren und das Rauschen, das dem Strahl und der Oberfläche des Objekts innewohnt, zu korrigieren.

2. System nach Anspruch 1, wobei zwei Kameras beiderseits der Mittel zur Projektion angeordnet sind, um die toten Winkel der Erfassung zu begrenzen.

3. System nach einem der vorhergehenden Ansprüche, wobei das Objekt auf einem translatorisch bewegbaren Träger angeordnet ist.

4. System nach einem der vorhergehenden Ansprüche, wobei das Objekt ein Katalysator aus Körnern, Kugeln oder Extrudatstücken ist.

## Claims

1. System for three-dimensional object surface acquisition, comprising means for projecting a thin light beam, at least one digital camera for acquiring images of the profile produced by said beam on the object, means for moving the beam along the object, and means for processing the acquired images, in which system the projecting means comprise an LED the light of which is focused to form a fringe of thickness smaller than 50 µm, the system being **characterized in that**: the means for processing the images are configured to analyse the profiles at the subpixel level using an interpolation function and to correct the noise inherent to the beam and the noise inherent to the surface of the object.

2. System according to Claim 1, wherein two cameras are placed on either side of the projecting means so as to limit acquisition blind spots.

3. System according to one of the preceding claims, wherein the object is placed on a translationally moveable holder.

4. System according to one of the preceding claims, wherein said object is a particle, bead or extrudate catalyst.
